# EUROPÄISCHE PATENTSCHRIFT

(11) **EP 1 382 634 B1**
(45) Veröffentlichungstag und Bekanntmachung des Hinweises auf die Patenterteilung: **12.08.2009**
(21) Anmeldenummer: 03012581.9
(22) Anmeldetag: 03.06.2003
(51) Int. Cl.: C08J 3/18, C08L 51/00, C09D 5/00, C08J 3/24

(54) **Plastisole und damit hergestellte beschichtete Bleche**
Plastisols and sheets coated therewith
Plastisol et tôle revêtue

(30) Priorität: 21.06.2002 DE 10227898
(43) Veröffentlichungstag der Anmeldung: 21.01.2004
(73) Patentinhaber: Evonik Röhm GmbH, 64293 Darmstadt (DE)
(72) Erfinder: Löhden, Gerd, Dr., 63457 Hanau (DE); Roos, Sebastian, Dr., 65799 Kelkheim/Ts (DE); Belzner, Winfried, 63584 Gründau (DE); Geyer, Hans-Jürgen, 64367 Mühltal (DE); Jung, Herbert, 63791 Karlstein (DE); Rausch, Ursula, 64347 Griesheim (DE)

(56) Entgegenhaltungen:
- EP-A- 0 533 026
- EP-A- 1 283 228

## Beschreibung

### Gebiet der Erfindung

Die Erfindung betrifft Poly(meth)acrylatpolymere mit verbesserten Eigenschaften, insbesondere verbesserter Abriebfestigkeit der daraus erhältlichen Plastisole und mit den Plastisolen beschichtete Bleche, insbesondere Karosseriebleche.

Über längere Zeit hin haben Beschichtungen und Beläge aus Polyvinylchlorid (PVC) auf dem Markt aufgrund ihrer vielseitigen Anwendbarkeit und ihrer guten Gebrauchseigenschaften eine überragende Rolle gespielt. Dispersionen von PVC-Pulvern in Weichmachern, sogenannte Plastisole, meist unter Zusatz von Stabilisatoren und ggfls. von Füllstoffen/Pigmenten werden in größerem Umfang zur Beschichtung insbesondere im Heißtauchverfahren angewendet beispielsweise zum Korrosionsschutz von Metallen, zur Ausrüstung von Textilien und Ledern, für Schaumstoffe, Klebstoffe u. ä. (vgl. Savetnik, Plastisols and Organosols, Van Nostrand, New York 1972; W. Becker und D. Braun Kunststoff-Handbuch (Neuausgabe) Bd. 2/2, S. 1077ff, Hanser Verlag 1986).

Plastisole stellen in der Regel zweiphasige Systeme dar, deren eine Komponente ein Kunststoff oder Kunststoffgemisch (Bindemittel) und die zweite ein geeigneter Weichmacher ist. Prinzipiell sind Bindemittel verschiedenster Kunststoffe denkbar, zur technischen Anwendung sind allerdings nur sehr wenige Kunststoffe gekommen. Die weitaus bedeutendste Klasse von Polymeren, die für diesen Zweck eingesetzt werden, leitet sich vom Polyvinylchlorid (PVC) ab. Aufgrund umweltrelevanter Gesichtspunkte ist der Einsatz von PVC jedoch bedenklich. Auch die Gefahr der Dioxinbildung im Brandfall und der mit in Zusammenhang stehenden Kontamination der Umgebung ist oftmals prohibitiv für den Einsatz von PVC.

Aus diesem Grund wird versucht, Plastisole auf der Basis von Polyacrylaten herzustellen (vgl. DE-PS 034 498, FR-A 2,291,248, EP 0 774 483 A2).

### Stand der Technik

EP 0 533 026 (Röhm GmbH) beschreibt ein Plastisolsystem mit verbesserter Haftung auf Kataphoreseblech auf der Basis von Polyalkyl(meth)acrylaten, wobei die gelierfähige Masse aus Monomeren mit einem Alkylsubstituenten von 2-12 Kohlenstoffatomen und aus einem Säureanhydrid aufgebaut ist.

Über die Abriebfestigkeit der erhaltenen Plastisolformulierungen werden keine Aussagen gemacht.

DE 198 14 264 (Degussa-Hüls AG) beschreibt verbesserte Poly(meth)acrylat-Plastisole, die bessere Lagerstabilität, höhere Bruchdehnung und bessere Filmbildungseigenschaften aufweisen. Über die Abriebfestigkeit der erhaltenen Plastisole wird keine Angabe gemacht.

EP 1 162 217 (Mitsubishi Rayon Co.) beschreibt ein Poly(alkyl)methacrylat-Plastisol, welches aus Primärpartikeln mit einem Durchmesser > 250 mm aufgebaut ist, wobei die Primärpartikel aus Kern-Schale-Teilchen bestehen. Die erhaltenen Plastisole sind lagerstabil, Angaben über die Abriebfestigkeit fehlen.

WO 01/21707 (Mitsubishi Rayon Co.) beschreibt feinteilige Polymerisate zur Plastisolherstellung. Die Polymerisatteilchen werden durch eine spezifische Oberfläche zwischen 0,6 - 20,0 m²/g, bestimmt durch Stickstoffadsorption, charakterisiert. Mechanische Daten der erhaltenen Plastisole fehlen.

JP 82 95 850 (Mitsubishi Rayon Co.) beschreibt ein Poly(meth)acrylat-Plastisol mit einem gradientenförmigen Aufbau, wobei die Konzentration der ungesättigten Carbonsäure und die Konzentration des mit dem Weichmacher unverträglichen Monomeren vom Kern zur Schale zunimmt. Mechanische Daten des Plastisols fehlen.

JP 11-07 6855 (Mitsubishi Rayon Co.) beschreibt ein Kern-Schale-Polymer, welches funktionelle Gruppen aufweist. Die funktionellen Gruppen des Kern-Schale-Polymers sind in der Lage, bei der Gelbildungstemperatur (ca. 200°C) mit weiteren funktionellen Gruppen einer organischen niedermolekularen Verbindung zu reagieren. Mechanische Eigenschaften des Plastisolfilms werden nicht mitgeteilt.

### Aufgabe

Es bestand also die Aufgabe, ausgehend von bekannten Plastisolformulierungen ein für Plastisolanwendungen geeignetes Polymer oder Polymermischung (Bindemittel) zu entwickeln, das in dem Plastisol verbesserte mechanische Eigenschaften aufweist, wie beispielsweise eine verbesserte Abriebfestigkeit und eine verbesserte Haftung auf dem grundierten Karosserieblech.

### Lösung der Aufgabe

Gelöst wird die Aufgabe durch eine Polymermischung aus den Polymeren A und B. Die Polymere A und B können eine Kern-Schale 1-Schale 2-Struktur oder einer Kern-Schale 1-Schale 2-Schale 3-Struktur oder einem gradientenförmigen Aufbau der Partikel aufweisen. Unter einem gradientenförmigen Aufbau der Partikel wird verstanden, dass ausgehend von einer bestimmten Konzentration eines Monomeren im Monomerengemisch, das zur Polymerisation des Kerns eingesetzt wird, die Konzentration des Monomeren im Monomerengem sich mit dem Radius des Teilchens, welches annähernd kugelförmig gedacht werden kann, ändert.

Die Änderung der Konzentration kann in einer Zunahme der Konzentration oder in einer Abnahme der Konzentration des betreffenden Monomeren bestehen.

Im Falle eines dreistufigen Emulsionspolymerisats besteht das Polymerpartikel aus einem Kern, einer ersten Schale und einer zweiten Schale.

Der Kern des Polymers A besteht aus einem Polymer mit folgender Monomerzusammensetzung:
K A a)10 - 50 Masse-%, bezogen auf das Kernmaterial an (Meth)acrylaten, die sich von gesättigten Estern der (Meth)acrylsäure ableiten 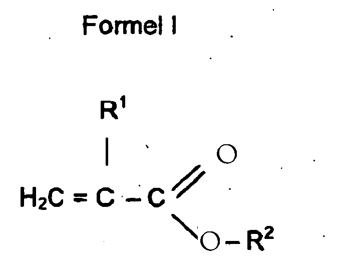 wobei gilt:

   R¹ = H₁ CH₃

   R₂ = CH₃, CH₂-CH₃
K A b) 50 - 90 Masse-%, bezogen auf das Kernmaterial an Verbindungen der Formel I, wobei R¹ die vorstehend genannten Bedeutungen aufweist und R² folgende Bedeutungen hat: Propyl, Isopropyl, Tertiärbutyl, n-Butyl, Isobutyl, Pentyl, Hexyl, iso-Octyl, Octyl-, Cyclohexyl, 2-Ethylhexyl, Octadecyl, Dodecyl, Tetradecyl, Oleyl, Decyl, Benzyl, Cetyl, Isobornyl, Neopentyl, Cyclopentyl, Undecyl.
K A c) 0-10 Masse-%, bezogen auf das Kernmaterial an Verbindungen, die mit den vorstehend genannten Monomeren copolymerisierbar sind, wie beispielsweise Styrol. Als mit den Alkyl(meth)acrylaten copolymerisierbare Verbindungen können unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1; Vinylester, wie Vinylacetat; Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole und Tribromstyrole eingesetzt werden.
K A d) 0,1 - 9,9 Masse-% an Monomeren, die eine Epoxygruppe aufweisen, wie beispielsweise Glycidylmethacrylat oder Glycidylacrylat.

Die äußerste Schale S1 des Polymers A besteht aus einem Polymer mit folgender Monomerzusammensetzung:
S₁ A a) 70 - 100 Masse-% von Monomeren der Formel I, wobei gilt:
   R¹ hat die oben angegebenen Bedeutungen und
   R² bedeutet CH₃, CH₂-CH₃
S₁ A b) 0 - 30 Masse-% des Monomeren der Formel 1, wobei gilt:
   Die Reste haben die bei K A b) angegebene Bedeutung.
S₁ A c) 0-10 Masse-% eines mit S₁ A a) - S₁ A b) copolymerisierbaren Monomeren, wie beispielsweise Styrol und Styrolderivate und Vinylacetat. Weitere mögliche Monomere sind bei K A c) aufgeführt.

Die äußerste Schale des Polymers A ist vorzugsweise frei von epoxyhaltigen Monomeren.

Die zweite Schale S₂ des Polymers A besteht aus einem Polymer mit folgender Monomerzusammensetzung:
S₂ A a) 20 - 80 Masse-% von Monomeren der Formel I, wobei gilt:
   R¹ hat die oben angegebenen Bedeutungen und

      R₂ = CH₃, CH₂-CH₃
S₂ A b) 20 - 70 Masse-% des Monomeren der Formel 1, wobei gilt:
   R¹ hat die oben angegebenen Bedeutungen und R² hat die gleichen Bedeutungen wie bei K A b.
S₂ A c) 0,1 - 9,9 Masse-% an Monomeren, die eine Epoxygruppe aufweisen, wie beispielsweise Glycidylmethacrylat oder Glycidylacrylat.

Die dritte Schale S3 besteht aus einem Polymer mit folgender Monomerzusammensetzung:
S₃ A a) 30 - 90 Masse-% von Monomeren der Formel I, wobei gilt:
   R¹ hat die oben angegebenen Bedeutungen und
   R² bedeutet CH₃, CH₂-CH₃
S₃ A b) 10 - 70 Masse-% des Monomeren der Formel 1, wobei gilt:
   R¹ hat die oben angegebenen Bedeutungen und R² hat die gleichen Bedeutungen wie bei K A b.
S₃ A c) 0 - 10 Masse-% eines mit S₁a) - S₁b) copolymerisierbaren Monomeren wobei die Monomeren die bei K A c angegebenen Bedeutungen haben.

Das Polymer B kann aus einem Kern-Schale- oder einem Kern-Schale 1 - Schale 2- oder aus einem Kern-Schale 1 - Schale 2 - Schale 3-Polymer bestehen.
K B a)10 - 50 Masse-%, bezogen auf das Kernmaterial an (Meth)acrylaten, die sich von gesättigten Estern der (Meth)acrylsäure ableiten 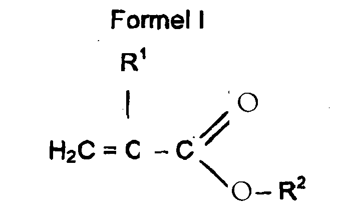 wobei gilt:

   R¹ = H₁ CH₃

   R₂ = CH₃, CH₂-CH₃
K B b) 50 - 90 Masse-%, bezogen auf das Kernmaterial an Verbindungen der Formel I, wobei R¹ und R² die bei K A b) angeführte Bedeutung haben.
K B c) 0 - 10 Masse-%, bezogen auf das Kernmaterial an Verbindungen die mit den vorstehend genannten Monomeren copolymerisierbar sind, wie beispielsweise Styrol und Styrolderivate und Vinylacetat. Weitere Bedeutungen sind bei K A c) angeführt.
K B d) 0,1 - 9,9 Masse-% an Monomeren, die nucleophile Gruppen enthalten, wie beispielsweise N-Vinylimidazol. Weiter seien insbesondere solche Monomere aus der Klasse der Vinylimidazole, der Vinyllactame, der Vinylcarbazole und der Vinylpyridine genannt. Beispiele, die keinerlei Beschränkungen darstellen sollen, für diese monomeren Imidazolverbindungen sind N-Vinylimidazol (auch Vinyl-1-imidazol genannt), N-Vinyl-meth-2-imidazol, N-Vinyl-äthyl-2-imidazol, N-Vinylphenyl-2-imidazol, N-Vinyl-dimethyl-2,4-imidazol, N-Vinyl-benzimidazol, N-Vinylimidazolin (auch Vinyl-1-imidazolin genannt), N-Vinyl-methyl-2-imidazolin, N-Vinyl-phenyl-2-imidazolin und Vinyl-2-imidazol.
   Als Beispiele für Monomere, die sich von den Lactamen ableiten, lassen sich insbesondere Verbindungen, wie die folgenden anführen:
   N-Vinylpyrrolidon, N-Vinylmethyl-5-pyrrolidon, N-Vinylmethyl-3-pyrrolidon, N-Vinyl-äthyl-5-pyrrolidon, N-Vinyldimethyl-5-5-pyrrolidon, N-Vinylphenyl-5-pyrrolidon, N-Allylpyrrolidon, N-Vinylthiopyrrolidon, N-Vinylpiperidon, N-Vinyldiäthyl-6,6-piperidon, N-Vinylcaprolactam, N-Vinylmethyl-7-caprolactam, N-Vinyläthyl-7-caprolactam, N-Vinyldimethyl-7,7-caprolactam, N-Allyl-caprolactam, N-Vinylcapryllactam. Unter den Monomeren, die sich vom Carbazol ableiten, lassen sich insbesondere anführen: N-Vinylcarbazol, N-Allylcarbazol, N-Butenylcarbazol, N-Hexenylcarbazol und N-(Methyl-1-ethylen)carbazol.

Die äußerste Schale S1 des Polymers B besteht aus einem Polymer mit folgender Monomerzusammensetzung:
S₁ B a) 70-100 Masse-% von Monomeren der Formel I, wobei gilt:
   R¹ hat die oben angegebenen Bedeutungen und
   R² bedeutet CH₃, CH₂-CH₃
S₁ B b) 0 - 30 Masse-% des Monomeren der Formel 1, wobei gilt:
   R¹ und R² haben die bei K A b) angeführte Bedeutung.
S₁ B c) 0 - 10 Masse-% eines mit S₁ B a) - S₁ B b) copolymerisierbaren Monomeren, wie beispielsweise Styrol und Styrolderivate und Vinylacetat. Weitere Bedeutung wie bei K A c).
S₁ B d) 0,1 - 9,9 Masse-% an Monomeren, die nucleophile Gruppen enthalten. Unter den Monomeren, nucleophile Gruppen enthalten, versteht man die unter K B d aufgeführten.

Die zweite Schale S₂ des Polymers B besteht aus einem Polymer mit folgender Monomerzusammensetzung:
S₂ B a) 20 - 80 Masse-% von Monomeren der Formel I, wobei gilt:
   R¹ hat die oben angegebenen Bedeutungen und

      R₂ = CH₃, CH₂-CH₃
S₂ B b) 20 - 70 Masse-% des Monomeren der Formel 1, wobei gilt:
   R¹ hat die oben angegebenen Bedeutungen und R² hat die gleichen Bedeutungen wie bei K B b.
S₂ B c) 0,1 - 9,9 Masse-% an Monomeren, die zu einer nucleophilen Reaktion mit dem exoxidhaltigen Monomer von Polymer A in der Lage sind, wie beispielsweise N-Vinylimidazol. Unter diesen nucleophilen Monomeren versteht man die unter K B d aufgeführten.

Die dritte Schale S3 besteht aus einem Polymer mit folgender Monomerzusammensetzung:
S₃ B a) 30 - 90 Masse-% von Monomeren der Formel I, wobei gilt:
   R¹ hat die oben angegebenen Bedeutungen und
   R² bedeutet CH₃, CH₂-CH₃
S₃ B b) 10 - 70 Masse-% des Monomeren der Formel 1, wobei gilt:
   R¹ hat die oben angegebenen Bedeutungen und R² hat die gleichen Bedeutungen wie bei K B b.
S₃ B c) 0 - 10 Masse-% eines mit S₁a) - S₁b) copolymerisierbaren Monomeren, wobei die Monomeren die bei K A c angegebenen Bedeutungen haben.
S₃ B d) 0,1 - 9,9 Masse-% an Monomeren, die nucleophile Gruppen enthalten. Unter den Monomeren, die nucleophile Gruppen enthalten, versteht man, die unter K B d aufgeführten.

### Mengenverhältnisse im Polymer A

Der Kern (K A) des Polymers A kann zwischen 20 und 90 Masse-%, bezogen auf die Gesamtmasse des Polymeren A betragen, die äußerste Schale (S₁ A) kann zwischen 10 und 80 Masse-%, bezogen auf die Gesamtmasse des Polymeren A betragen, die zweite Schale (S₂ A) kann zwischen 0 - 70 Masse-% bezogen auf die Gesamtmasse des Polymeren A betragen, die dritte Schale (S₃ A) kann ebenfalls zwischen 0 und 70 Masse-%, bezogen auf die Gesamtmasse des Polymeren A, betragen.

### Mengenverhältnisse im Polymer B

Der Kern (K B) des Polymers B kann zwischen 20 und 100 Masse-%, bezogen auf die Gesamtmasse des Polymeren B betragen. Die äußerste Schale (S₁ B) kann zwischen 0 und 80 Masse-%, bezogen auf die Gesamtmasse des Polymeren B betragen. Die weitere Schale (S₂ B) kann zwischen 0 und 70 Masse-%, bezogen auf die Gesamtmasse des Polymeren B betragen, und die dritte Schale kann ebenfalls zwischen 0 und 70 Masse-%, bezogen auf die Gesamtmasse des Polymeren B betragen.

Die mittleren Molekulargewichte der Polymere A und B liegen zwischen 200000 und mehreren Millionen.

Die erfindungsgemäßen Plastisole enthalten an sich bekannte Weichmacher W in den dafür üblichen Mengen, beispielsweise für die PMMA-Plastisole (aber auch für PVC-Plastisole) üblichen Weichmacher, insbesondere Phthalsäureester, daneben Adipinsäure- und/oder Sebacinsäureester, chlorierte Paraffine, Trialkylphosphate, aliphatische oder araliphatische Polyester sowie sonstige polymere Weichmacher wie z. B. Harnstoffweichharze. (Vgl. H. K. Felger, Kunststoff-Handbuch Bd. 1/1C, Kanser-Verlag 1985 sowie in H. F. Mark et al. Encyclopedia of Polymer Science and Engineering, Supplemental Volume pg. 568-647 J. Wiley 1989). Eine Auswahl geeigneter Weichmacher kann auch der DE-C 25 43 542 entnommen werden. Vorzugsweise kommen Weichmacher bzw. Weichmacherkombinationen infrage, die bei einer Lagerzeit der konfentionierten Plastisole über 3 Wochen bei 30° C einen Viskositätsanstieg unter dem zehnfachen speziell unter dem fünffachen Wert der Ausgangsviskosität ergeben. Besonders erwähnt seien das Dioctylphthalat, Diisodecylphthalat, Diethylhexylphthalat, Di-C₇-C-₁₁-n-alkylphthalat, Trikresylphosphat, Dibenzyltoluol (LIPINOL®T, Produkt der Fa. Hüls AG), 2,2,4-Trimethyl-1,3-pentandioldibenzoat (Benzoflex® 354, Produkt der Firma Velsicol) und Benzyloctylphthalat.

Weiterhin enthalten die Plastisole gewöhnlich noch an sich bekannte anorganische Füllstoffe in Mengen bis zu 700 Gew.-Teilen. Genannt seien beispielsweise Calciumcarbonat (Kreide), Titandioxid, Titandioxid, Calciumoxid, Perlit, gefällte und gecoatete Kreiden als rheologisch wirksame Additive, ferner ggf. Thixotropierungsmittel wie z. B. pyrogene Kieselsäure. Die Körngröße liegt meist im Bereich µm. Die Plastisole können anwendungsbedingt noch an sich bekannte Hilfsstoffe wie Haftvermittler, Netzmittel, Stabilisatoren, Verlaufsmittel, Treibmittel in Anteilen von 0 bis 5 Gew.-%.

Die Plastisole können übliche Zusatzstoffe aller Art enthalten. Hierzu gehören unter anderem Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite oder Phosphonate, Pigmente, Verwitterungsschutzmittel und Weichmacher.

### Herstellungsbeispiel für ein Kern-Schale 1-Schale 2-Polymer vom Typ A:

In einem Technikumsreaktor werden als Vorlage: 231 kg VE-Wasser eingefüllt und auf 83 bis 87 Grad Celsius erwärmt.

In den Emulgierbehälter wird aus

| | |
|---|---|
| 52 kg | VE-Wasser (vollentsalztes Wasser) |
| 1,44 kg | Disponil SUS I C 875 (Emulgator, Herstellung und Vertrieb Henkel KGaA) |
| 35,6 kg | Methylmethacrylat (MMA) |
| 44 kg | n-Butylmethacrylat |
| 38 kg | Isobutylmethacrylat |
| 2,4 kg | Glycidylmethacrylat |

eine Monomeremulsion hergestellt und über ca. 45 min in den Reaktor zudosiert.
Es wird mit 153 g Natriumpersulfat und 212 g Natriumbisulfit (Na₂S₂O₅) initiiert. Die Nachreaktionsdauer beträgt ca. 10 min.

Danach wird über ca. 45 min. bei der gleichen Temperatur folgende Mischung zudosiert:

| | |
|---|---|
| 86 kg | VE-Wasser |
| 2,4 kg | Disponil SUS I C |
| 115,6 kg | MMA |
| 44 kg | n-Butylmethacrylat |
| 38 kg | Isobutylmethacrylat |
| 2,4 kg | Glycidylmethacrylat |

Es wird mit 15,8 g Natriumperfulfat und 13,6 g Natriumbisulfit initiiert. Die Nachreaktionszeit beträgt ca. 10 Minuten.

Anschließend wird über ca. 20 Minuten folgende Mischung zugefügt:

| | |
|---|---|
| 34 kg | VE-Wasser |
| 0,9 kg | Emulgator (Disponil SUS I C) |
| 80 kg | MMA |

Es wird mit 11,6 g Natriumpersulfat und 10,0 g Natriumbisulfit initiiert. Die Nachreaktionszeit beträgt 30 Minuten.

Die Herstellung der Polymeren B erfolgt analog nach der obigen Vorschrift. Anstelle der epoxihaltigen Verbindung, beispielsweise Glycidylmethacrylat, wird beispielsweise N-Vinylimidazol als nucleophile Verbindung eingesetzt.

Allgemeine Herstellungvorschrift des Plastisols:

Die beiden Polymere A und B werden vor der Verarbeitung zum Plastisol miteinander gemischt oder getrennt in den vorgelegten Weichmacher und die üblichen Hilfsstoffe eingearbeitet. Das Mischungsverhältnis zwischen den Polymeren A und B kann zwischen 100 : 0 und 20: 80 Gewichtsteilen liegen. Das Mengenverhältnis an Polymermischung aus der Summe der Polymeren A und B zu dem Weichmacher kann zwischen 80 : 20 und 30 : 70 Gewichtsteilen liegen.

Die PAMA-Plastisolpasten zeichnen sich durch hervorragende Eigenschaften aus. Sie zeigen insbesondere eine hohe Haltbarkeit. Darüber hinaus können sie einfach verarbeitet werden, wobei sie einen homogenen Plastisolfilm bilden. Dieser Plastisolfilm zeigt eine hervorragende Stabilität und Abrieb.

### Herstellung der Plastisolformulierung

Folgende Bestandteile wurden gemischt und mittels üblicher Apparate homogenisiert:

| | |
|---|---|
| Polymer (Bindemittel, Komponte A und Komponente B) | 350 Gew.-Teile |
| Jayflex DINP (Exxon) (Weichmacher) Diisooctylphthalat, | 244 Gew.-Teile |
| Omya BSH (CₐCO₃ | 111 Gew.-Teile |
| Blanc fixe micro (Sachtleben) BₐSO₄ | 111 Gew.-Teile |
| Omyalite 90 (CaO, Omya) | 22 Gew.-Teile |
| Shellsol I (Shell, Verdünner) | 70 Gew.-Teile |

### Beschreibung des Abriebtests

Der Test erfolgte in Anlehnung an die Werksnorm von Renault und VW.

In einer Strahlkabine (Hersteller: Auer-Strahltechnik, Modell ST 700 PS) wird ein mit dem zu prüfenden Plastisol beschichtetes Blech unter einem Winkel von 30° mittels einer Auer Strahlpistole SPA 80 (Strahldüse aus Borcarbid, 10 mm Düsendurchmesser; Luftdüse, Düsendurchmesser 4 mm) bestrahlt. Der Strahldruck beträgt zwischen 3 und 4 bar. Der Abstand von Düse und Prüfblech beträgt 10 cm. Als Strahlmittel wird Hartguß GP 14 in einer Korngröße von 1 - 2 mm eingesetzt. Es wird die Zeit bis zum Durchschlag auf das Blech bestimmt.

Diese und die bei anderen Automobilherstellern eingesetzten Methoden werden von D. Symietz in "Steinschlag- und Korrosionsschutz", Reihe: Die Bibliothek der Technik, Bd. 171, Verlag moderne industrie (1998) beschrieben.

Das Plastisol wurde auf ein KTL-Blech (mit einem Kathaphorese-Lack beschichteten Blech) aufgetragen und 15 Min. bei 160°C geliert. Die Trockenschichtdicke des Überzugs betrug 1000 µm.

Die Beurteilung der Proben erfolgte im Abriebtest und im Gitterschnitttest nach DIN 53 151.

| Zusammensetzung der Polymer-Beispiele | | | |
|---|---|---|---|
| Beispiel | Zusammensetzung | | |
| 1 | 2 % Glycidylmethacrylat im Kern | 2-stufig | Polymer A |
| 2 | 4 % Glycidylmethacrylat im Kern | 3-stufig | Polymer A |
| 3 | 2 % Glycidylmethacrylat im Kern | 3-stufig | Polymer A |
| 4 | 2 % Imidazol im Kern | 3 stufig | Polymer B |
| 5 | 2 % Imidazol im Kern und Schale | 3-stufig | Polymer B |
| 6 | 2 % Imidazol nur in Schale | | |
| 7 | Vergleichsbeispiel: EP 0 533 026 Beispiel 2 | | |
| 8 | Vergleichsbeispiel: DE 198 14 264 Produkt 8 | | |
| 9 | EP 1162217 (MRC) Produkt 6 | | |
| 10 | EP 1162217 (MRC) Produkt 8 | | |
| 11 | JP 8295850 (MRC) Produkt 1 | | |

| Ergebnisse der Plastisol-Beispiele: | | | |
|---|---|---|---|
| Nr. | Bindemittel oder Polymer | Abrieb in Sek. | Haftung |
| 1 | 100 % nach Beispiel 1 (Komponente A) | 528 | ½ |
| 2 | 100 % nach Beispiel 2 (Komponente A) | 532 | ½ |
| 3 | 100 % nach Beispiel 3 (Komponente A) | 517 | 2/4 |
| 4 | 100 % nach Beispiel 4 (Komponente B) | 476 | 0/1 |
| 5 | 100 % nach Beispiel 5 (Komponente B) | 463 | 0/0 |
| 6 | 100 % nach Beispiel 6 (Komponente B) | 442 | 0/0 |
| 7 | 50 % nach Beisp. 1 und 50 % nach Beisp. 4 | 535 | 0/1 |
| 8 | 30 % nach Beisp. 1 und 70 % nach Beisp. 4 | 498 | 0/0 |
| 9 | 70 % nach Beisp. 1 und 30 % nach Beisp. 4 | 524 | 1/1 |
| 10 | 50 % nach Beisp. 2 und 50 % nach Beisp. 4 | 522 | 0/2 |
| 11 | 30 % nach Beisp. 2 und 70 % nach Beisp. 4 | 524 | 0/0 |
| 12 | 70 % nach Beisp. 2 und 30 % nach Beisp. 4 | 517 | 0/2 |
| 13 | 50 % nach Beisp. 3 und 50 % nach Beisp. 4 - nicht stabil während Lagerung - | 369 | 1/1 |
| 14 | 50 % nach Beisp. 1 und 50 % nach Beisp. 5 | 539 | 0/0 |
| | 70 % nach Beisp. 1 und 30 % nach Beisp. 5 | 544 | 0/0 |
| | 30 % nach Beisp. 1 und 70 % nach Beisp. 5 | 512 | 0/0 |
| 15 | Vergleichsbeispiel 7 | 198 | 0/0 |
| 16 | Vergleichsbeispiel 8 | 120 | 5/5 |
| 17 | Vergleichsbeispiel 9 | 413 | 3/3 |
| 18 | Vergleichsbeispiel 10 | 369 | 3/3 |
| 19 | Vergleichsbeispiel 11 | 442 | 2/2 |

## Patentansprüche

1. Bindemittel für eine Plastisolformulierung, enthaltend ein partikelförmiges Polymergemisch aus mindestens zwei Komponenten A und B,
**dadurch gekennzeichnet,**
**dass** die Komponente A ein Polymerpartikel Emulsionspolymerisat darstellt, wobei der Kern des Polymerpartikels aus folgenden Monomerkomponenten besteht:
• K A a)10 - 50 Masse-%, bezogen auf das Kernmaterial an (Meth)acrylaten, die sich von gesättigten Estern der (Meth)acrylsäure ableiten
Formel I, 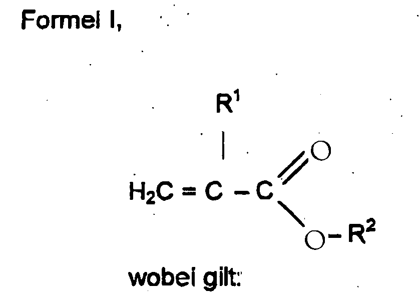
wobei gilt:
R¹ = H, CH₃
R² = CH₃, CH₂-CH₃,
• K A b) mindestens 50 Masse-%, bezogen auf das Kernmaterial an Verbindungen der Formel I,
wobei R¹ die vorstehend genannten Bedeutungen aufweist und R² folgende Bedeutungen annimmt: Propyl, Isopropyl, Tertiärbutyl, n-Butyl, Isobutyl, Pentyl, Hexyl, iso-Octyl, Octyl-, Cyclohexyl, 2-Ethylhexyl, Octadecyl, Dodecyl, Tetradecyl, Oleyl, Decyl, Benzyl, Cetyl, Isobornyl, Neopentyl, Cyclopentyl, Undecyl,
• K A c) 0 - 10 Masse-%, bezogen auf das Kernmaterial an Verbindungen, die mit den vorstehend genannten Monomeren copolymerisierbar sind, als mit den Alkyl(meth)acrylaten copolymerisierbare Verbindungen können unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1; Vinylester, wie Vinylacetat; Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, und Tribromstyrole.
• K A d) 0,1 - 9,9 Masse-% an Monomeren, die eine Epoxygruppe aufweisen,
wobei die Summe aus KAa), KAb), KAc) und KAd) jeweils 100 % ergibt,
und
die äußerste Schale S₁ des Polymers A besteht aus einem Polymer mit fölgender.Monomerzusammensetzung:
• S₁ A a) mindestens 70 Masse-% von Monomeren der Formel I, wobei gilt:
R¹ hat die oben angegebenen Bedeutungen und R² bedeutet CH₃, CH₂-CH₃
• S₁ A b) 0 - 30 Masse-% des Monomeren der Formel 1, wobei gilt:
die Reste haben die bei K A b) angegebene Bedeutung,
• S₁ A c) 0 - 10 Masse-% eines mit S₁ A a) - S₁ A b) copolymerisierbaren
Monomeren, weitere mögliche Monomere sind bei K A c) aufgeführt, die äußerste Schale des Polymers A ist frei von epoxyhaltigen Monomeren,
wobei die Summe aus S₁ A a), S₁A b) und S₁ A c) jeweils 100 % ergibt,
die zweite Schale S₂ des Polymers A besteht, falls sie vorhanden ist, aus einem Polymer mit folgender Monomerzusammensetzung:
• S₂ A a) mindestens 20 Masse-% von Monomeren der Formel I, wobei gilt:
R¹ hat die oben angegebenen Bedeutungen und
R² = CH₃, CH₂-CH₃
• S₂ A b) 20 - 70 Masse-% des Monomeren der Formel 1, wobei gilt:
R¹ hat die oben angegebenen Bedeutungen und R² hat die gleichen Bedeutungen wie bei K A b,
• S₂ A c) 0,1 - 9,9 Masse-% an Monomeren, die eine Epoxygruppe aufweisen, wie beispielsweise Glycidylmethacrylat oder Glycidylacrylat,
wobei die Summe aus S₂ A a), S₂ A b) und S₂ A c) jeweils 100 % ergibt,
die dritte Schale S₃ des Polymers A besteht, falls sie vorhanden ist, aus einem Polymer mit folgender Monomerzusammensetzung
• S₃ A a) mindestens 30 Masse-% von Monomeren der Formel I, wobei gilt:
R¹ hat die oben angegebenen Bedeutungen und
R² bedeutet CH₃, CH₂-CH₃
• S₃ A b) 10 - 70 Masse-% des Monomeren der Formel I, wobei gilt:
R¹ hat die oben angegebenen Bedeutungen und
R² hat die gleiche Bedeutungen wie bei K A b,
• S₃ A c) 0 - 10 Masse-% eines mit S₁a) - S₁b) copolymerisierbaren Monomeren wobei die Monomeren die bei K A c angegebenen Bedeutungen haben,
wobei die Summe aus S₃ A a), S₃ A b) und S₃ A c) jeweils 100 % ergibt,
und wobei der Kern des Polymers B aus einem Polymer mit folgender Monomer zusammensetzung besteht:
• K B a) 10 - 50 Masse-%, bezogen auf das Kernmaterial an (Meth)acrylaten, die sich von gesättigten Estern der (Meth)acrylsäure ableiten 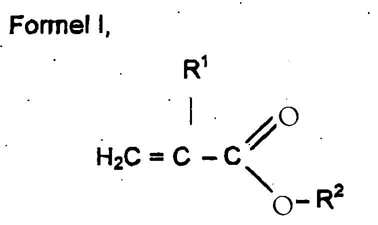 wobei gilt:
R¹ = H, CH₃
R² = CH₃, CH₂-CH₃
• K B b) mindestens 50 Masse-%, bezogen auf das Kernmaterial an Verbindungen der Formel I, wobei R¹ und R² die bei K A b) angeführte Bedeutung haben,
• K B c) 0 - 10 Masse-%, bezogen auf das Kernmaterial an Verbindungen die mit den vorstehend genannten Monomeren copolymerisierbar sind, weitere Bedeutungen sind bei K A c) angeführt,
• K B d) 0,1 - 9,9 Masse-% an Monomeren, die nucleophile Gruppen enthalten,
die äußerste Schale S₁ des Polymers B besteht falls sie vorhanden ist, aus einem Polymer mit folgender Monomerzusammensetzung
• S₁ B a) mindestens 70 Masse-% von Monomeren der Formel I, wobei gilt:
R¹ hat die oben angegebenen Bedeutungen und
R² bedeutet CH₃, CH₂-CH₃
• S₁ B b) 0 - 30 Masse-% des Monomeren der Formel 1, wobei gilt:
R¹ und R² haben die bei K A b) angeführte Bedeutung,
• S₁ B c) 0 - 10 Masse-% eines mit S₁ B a) - S₁ B b) copolymerisierbaren Monomeren, weitere Bedeutung wie bei K A c),
• S₁ B d) 0,1 - 9,9 Masse-% an Monomeren, die nucleophile Gruppen enthalten, die unter K B d aufgeführt wurden,
wobei die Summe aus S₁ B a), S₁ B b), S₁ B c) und S₁ B d) jeweils 100 % ergibt,
die zweite Schale S₂ des Polymers B besteht falls sie vorhanden ist, aus einem Polymer mit folgender Monomerzusammensetzung
• S₂ B a) mindestens 20 Masse-% von Monomeren der Formel I, wobei gilt:
R¹ hat die oben angegebenen Bedeutungen und
R₂ = CH₃, CH₂-CH₃
• S₂ B b) 20 - 70 Masse-% des Monomeren der Formel 1, wobei gilt: R¹ hat die oben angegebenen Bedeutungen und R² hat die gleichen Bedeutungen wie bei K B b,
• S₂ B c) 0,1 - 9,9 Masse-% an Monomeren, die zu einer nucleophilen Reaktion mit dem epoxidhaltigen Monomer von Polymer A in der Lage sind, wobei man unter diesen nucleophilen Monomeren die unter K B d aufgeführten versteht,
wobei die Summe aus S₂ B a), S₂ B b) und S₂ B c) jeweils 100 % ergibt,
die dritte Schale S₃ des Polymers B besteht, falls sie vorhanden ist, aus einem Polymer mit folgender Monomerzusammensetzung
• S₃ B a) mindestens 30 Masse-% von Monomeren der Formel I, wobei gilt:
R¹ hat die oben angegebenen Bedeutungen und
R² bedeutet CH₃, CH₂-CH₃
• S₃ B b) 10 - 70 Masse-% des Monomeren der Formel 1, wobei gilt:
R¹ hat die oben angegebenen Bedeutungen und R² hat die gleichen Bedeutungen wie bei K B b.
• S₃ B c) 0 - 10 Masse-% eines mit S₁a) - S₁b) copolymerisierbaren Monomeren, wobei die Monomeren die bei K A c angegebenen Bedeutungen haben,
• S₃ B d) 0,1 - 9,9 Masse-% an Monomeren, die nucleophile Gruppen enthalten, wobei man unter den Monomeren, die nucleophile Gruppen enthalten die unter K B d aufgeführten versteht,
wobei die Summe aus S₃ B a), S₃ B b), S₃ B c) und S₃ B d) jeweils 100 % ergibt.

2. Bindemittel für eine Plastisolformulierung, nach Anspruch 1
**dadurch gekennzeichnet,**
**dass** die Mischungsverhältnisse, bezogen auf die Gesamtmasse des
Polymeren A, folgende Werte annehmen können:
K A 20-90 Masse %
S₁A 10-80 Masse %
S₂A 0-70 Masse %
S₃A 0-70 Masse %
und die Zusammensetzung der einzelnen Komponenten den Bedeutungen in A1 entsprechen.

3. Plastisolformulierung, bestehend aus einem
a) Weichmacher oder Weichmachergemisch und
b) einem partikelförmigen Polymergemisch gemäß Anspruch 1, aus mindestens zwei Komponenten A und B, wobei die Polymerpartikel der Komponenten A und B
2-stufig oder 3-stufig oder mehrstufig aufgebaut sind und
c) den üblichen Zusätzen an Füllstoffen, Haftvermittlern, Stabilisatoren, Trocknungsmitteln, rheologischen Additiven und Hohlkörpern.

4. Plastisolformulierung nach Anspruch 3,
**dadurch gekennzeichnet,**
**dass** die Mischungsverhältnisse, bezogen auf die auf die Gesamtmasse des Polymeren B, folgende Werte annehmen können:
K B 20-100 Masse %
S₁B 0-80 Masse %
S₂B 0-70 Masse %
S₃B 0-70 Masse %

5. Verwendung der Plastisolformulierung nach einem der Ansprüche 3 - 4 zur Beschichtung von Blechen.

6. Blech, beschichtet mit einer Plastisolformulierung nach den Ansprüchen 3 - 4.

7. Fahrzeug, teilweise beschichtet mit Plastisolformulierung nach den Ansprüchen 3 - 4.

8. Verwendung der Plastisolformulierung nach Anspruch 3 als Unterbodenschutz für Straßenfahrzeuge.

## Claims

1. Binder for a plastisol formulation, comprising a particulate polymeric mixture comprising at least two components A and B, **characterized in that** said component A constitutes a polymeric particle comprising emulsion polymer, the core of the polymeric particle consisting of the following monomeric components:
• K A a) 10-50% by mass, relative to the core material, of (meth)acrylates which are derived from saturated esters of (meth)acrylic acid 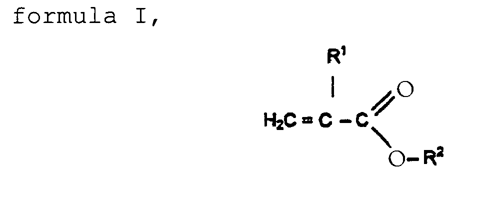 where
R¹ = H, CH₃
R² = CH₃, CH₂-CH₃,
• K A b) at least 50% by mass, relative to the core material, of compounds of formula I,
wherein R¹ has the aforementioned meanings and R² is selected from the group consisting of propyl, isopropyl, tertiary butyl, n-butyl, isobutyl, pentyl, hexyl, isooctyl, octyl, cyclohexyl, 2-ethylhexyl, octadecyl, dodecyl, tetradecyl, oleyl, decyl, benzyl, cetyl, isobornyl, neopentyl, cyclopentyl and undecyl,
• K A c) 0-10% by mass, relative to the core material, of compounds which are copolymerizable with the aforementioned monomers, compounds useful as being copolymerizable with the alkyl (meth)acrylates include 1-alkenes, such as 1-hexene, 1-heptene; branched alkenes, such as for example vinylcyclohexane, 3,3-dimethyl-1-propene, 3-methyl-1-diisobutylene, 4-methyl-1-pentene; vinyl esters, such as vinyl acetate; styrenes with an alkyl substituent in the side chain, such as for example α-methylstyrene and α-ethylstyrene, substituted styrenes with an alkyl substituent on the ring, such as vinyltoluene and p-methylstyrene, halogenated styrenes, such as for example monochlorostyrenes, dichlorostyrenes and tribromostyrenes,
• K A d) 0.1-9.9% by mass of monomers containing an epoxy group,
wherein the sum total of K A a), K A b), K A c) and K A d) adds up to 100% in each case, and
the outermost shell S₁ of said polymer A consists of a polymer having the following monomeric composition:
• S₁ A a) at least 70% by mass of monomers of formula I, wherein:
R¹ has the meanings indicated above and
R² is CH₃, CH₂-CH₃
• S₁ A b) 0-30% by mass of the monomer of formula I, wherein:
the radicals have the meaning indicated at K A b),
• S₁ A c) 0-10% by mass of a monomer copolymerizable with S₁ A a)-S₁ A b), further possible monomers are recited at K A c),
the outermost shell of said polymer A is free of epoxy-containing monomers,
wherein the sum total of S₁ A a), S₁ A b) and S₁ A c) adds up to 100% in each case,
the second shell S₂ of said polymer A, if present, consists of a polymer having the following monomeric composition:
• S₂ A a) at least 20% by mass of monomers of formula I, wherein:
R¹ has the meanings indicated above, and
R² = CH₃, CH₂-CH₃,
• S₂ A b) 20-70% by mass of the monomer of formula I, wherein:
R¹ has the meanings indicated above and R² has the same meanings as at K A b,
• S₂ A c) 0.1-9.9% by mass of monomers containing an epoxy group, such as for example glycidyl methacrylate or glycidyl acrylate,
wherein the sum total of S₂ A a), S₂ A b) and S₂ A c) adds up to 100% in each case,
the third shell S₃ of said polymer A, if present, consists of a polymer having the following monomeric composition:
• S₃ A a) at least 30% by mass of monomers of formula I, wherein:
R¹ has the meanings indicated above and
R² is CH₃, CH₂-CH₃
• S₃ A b) 10-70% by mass of the monomer of formula I, wherein:
R¹ has the meanings indicated above, and
R² has the same meanings as at K A b,
• S₃ A c) 0-10% by mass of a monomer copolymerizable with S₁a) -S₁b), wherein the monomers have the meanings indicated at K A c,
wherein the sum total of S₃ A a), S₃ A b) and S₃ A c) adds up to 100% in each case,
and wherein the core of said polymer B consists of a polymer having the following monomeric composition:
• K B a) 10-50% by mass, based on the core material, of (meth)acrylates which are derived from saturated esters of (meth)acrylic acid 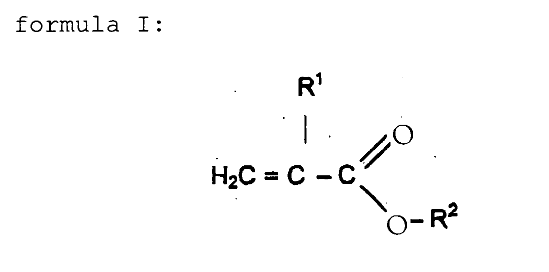 where
R¹ = H, CH₃
R² = CH₃, CH₂-CH₃
• K B b) at least 50% by mass, relative to the core material, of compounds of formula I, wherein R¹ and R² have the meaning recited at K A b),
• K B c) 0-10% by mass, relative to the core material, of compounds which are copolymerizable with the aforementioned monomers, further meanings are recited at K A c),
• K B d) 0.1-9.9% by mass of monomers containing nucleophilic groups,
the outermost shell S₁ of said polymer B, if present, consists of a polymer having the following monomeric composition:
• S₁ B a) at least 70% by mass of monomers of formula I, wherein:
R¹ has the meanings indicated above, and
R² is CH₃, CH₂-CH₃,
• S₁ B b) 0-30% by mass of the monomer of formula I, wherein:
R¹ and R² have the meaning recited at K A b),
• S₁ B c) 0-10% by mass of a monomer copolymerizable with S₁ B a) - S₁ B b), further meaning as at K A c),
• S₁ B d) 0.1-9.9% by mass of monomers containing nucleophilic groups, which were recited under K B d,
wherein the sum total of S₁ B a), S₁ B b), S₁ B c) and S₁ B d) adds up to 100% in each case,
the second shell S₂ of said polymer B, if present, consists of a polymer having the following monomeric composition:
• S₂ B a) at least 20% by mass of monomers of formula I, wherein:
R¹ has the meanings indicated above, and
R² = CH₃, CH₂-CH₃
• S₂ B b) 20-70% by mass of the monomer of formula I, wherein:
R¹ has the meanings indicated above, and R² has the same meanings as at K B b,
• S₂ B c) 0.1-9.9% by mass of monomers capable of a nucleophilic reaction with the epoxy-containing monomer of polymer A, these nucleophilic monomers to be understood as subsuming those recited under K B b,
wherein the sum total of S₂ B a), S₂ B b) and S₂ B c) adds up to 100% in each case,
the third shell S₃ of said polymer B, if present, consists of a polymer having the following monomeric composition:
• S₃ B a) at least 30% by mass of monomers of formula I, wherein:
R¹ has the meanings indicated above, and
R² is CH₃, CH₂-CH₃
• S₃ B b) 10-70% by mass of the monomer of formula 1, wherein:
R¹ has the meanings indicated above and R² has the same meanings as at K B b,
• S₃ B c) 0-10% by mass of a monomer copolymerizable with S₁a) -S₁b), wherein the monomers have the meanings indicated at K A c,
• S₃ B d) 0.1-9.9% by mass of monomers containing nucleophilic groups, the monomers containing nucleophilic groups to be understood as subsuming those recited under K B d,
wherein the sum total of S₃ B a), S₃ B b), S₃ B c) and S₃ B d) adds up to 100% in each case.

2. Binder for a plastisol formulation according to Claim 1, **characterized in that** the mixing ratios can assume the following values relative to the total mass of said polymer A:
K A 20-90% by mass
S₁A 10-80% by mass
S₂A 0-70% by mass
S₃A 0-70% by mass
and the compositions of the individual components correspond to the meanings in A1.

3. Plastisol formulation consisting of
a) a plasticizer or plasticizer mixture and
b) a particulate polymeric mixture according to Claim 1, comprising at least two components A and B, the polymeric particles of said components A and B having a 2-stage or 3-stage or multi-stage construction,
and
c) the customary additions of fillers, coupling agents, stabilizers, desiccants, rheological additives and hollow bodies.

4. Plastisol formulation according to Claim 3, **characterized in that** the mixing ratios can assume the following values relative to the total mass of said polymer B:
K B 20-100% by mass
S₁B 0-80% by mass
S₂B 0-70% by mass
S₃B 0-70% by mass.

5. Use of the plastisol formation according to either of Claims 3-4 for coating metal sheets.

6. Metal sheet coated with a plastisol formulation according to Claims 3-4.

7. Vehicle partly coated with plastisol formulation according to Claims 3-4.

8. Use of the plastisol formulation according to Claim 3 as underbody protection for road vehicles.

## Revendications

1. Liant pour une formulation de plastisol, contenant un mélange de polymères sous forme de particules composé au moins de deux composants A et B,
**caractérisé en ce que**
le composant A est constitué d'une particule polymère comprenant un polymère en émulsion, le noyau d'une telle particule polymère étant constitué des composants monomères suivants:
• K A a) 10 à 50 % en poids, par rapport au matériau de noyau, de (méth)acrylates dérivés d'esters saturés de l'acide (méth)acrylique 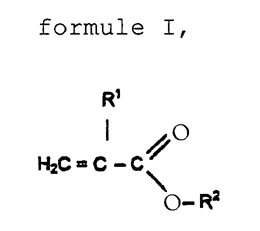 dans laquelle :
R¹ = H, CH₃
R² = CH₃, CH₂-CH₃,
• K A b) au moins 50 % en poids, par rapport au matériau de noyau, de composés répondant à la formule I,
R¹ ayant les significations mentionnées ci-dessus et R² ayant les significations suivantes : propyle, isopropyle, tert-butyle, n-butyle, isobutyle, pentyle, hexyle, iso-octyle, octyle, cyclohexyle, 2-éthylhexyle, octadécyle, dodécyle, tétradécyle, oléyle, décyle, benzyle, cétyle, isobornyle, néopentyle, cyclopentyle, undécyle,
• K A c) 0 à 10 % en poids, par rapport au matériau de noyau, de composés pouvant être copolymérisés avec les monomères mentionnés ci-dessus, en ce qui concerne les composés pouvant être copolymérisés avec les alkyl(méth)acrylates, il peut, entre autres, s'agir d'1-alcènes comme, par exemple, l'hexène-1, l'heptène-1; d'alcènes ramifiés comme, par exemple, le vinylcyclohexane, le 3,3-diméthyl-1-propène, le 3-méthyl-1-diisobutylène, le 4-méthylpentène-1; d'esters vinyliques comme l'acétate de vinyle; de styrènes dont la chaîne latérale est pourvue d'un substituant alkyle comme, par exemple, le α-méthylstyrène et le α-éthylstyrène, de styrènes dont le cycle est pourvu d'un substituant alkyle comme le vinyltoluène et le p-méthylstyrène, de styrènes halogénés comme, par exemple, le monochlorostyrène, le dichlorostyrène et le tribromostyrène.
• K A d) 0,1 à 9,9 % en poids de monomères comportant un groupe époxy,
la somme de K A a), K A b), K A c) et K A d) étant dans chaque cas de figure égale à 100 %,
et
la coque la plus à l'extérieur S₁ du polymère A étant constituée d'un polymère dont les monomères présentent la composition suivante :
• S₁ A a) au moins 70 % en poids de monomères répondant à la formule I, dans laquelle :
R¹ a les significations mentionnées ci-dessus et
R² signifie CH₃, CH₂-CH₃,
• S₁ A b) 0 à 30 % en poids de monomères répondant à la formule I, dans laquelle :
les radicaux ont la signification indiquée dans K A b),
• S₁ A c) 0 à 10 % en poids d'un monomère pouvant être copolymérisé avec S₁ A a) à S₁ A b), d'autres monomères possibles étant indiqués dans K A c), la coque la plus à l'extérieur du polymère A étant exempte de monomères contenant des groupements époxy,
la somme de S₁ A a), S₁ A b) et S₁ A c) étant dans chaque cas de figure égale à 100 %,
la deuxième coque S₂ du polymère A étant, si elle est présente, constituée d'un polymère dont les monomères présentent la composition suivante :
• S₂ A a) au moins 20 % en poids de monomères répondant à la formule I, dans laquelle :
R¹ a les significations mentionnées ci-dessus et
R² = CH₃, CH₂-CH₃
• S₂ A b) 20 à 70 % en poids de monomères répondant à la formule I, dans laquelle :
R¹ a les significations mentionnées ci-dessus et R² a les mêmes significations que dans K A b),
• S₂ A c) 0,1 à 9,9 % en poids de monomères comportant un groupement époxy comme, par exemple, le méthacrylate de glycidyle ou l'acrylate de glycidyle,
la somme de S₂ A a), S₂ A b) et S₂ A c) étant dans chaque cas de figure égale à 100 %,
la troisième coque S₃ du polymère A étant, si elle est présente, constituée d'un polymère dont les monomères présentent la composition suivante :
• S₃ A a) au moins 30 % en poids de monomères répondant à la formule I, dans laquelle :
R¹ a les significations mentionnées ci-dessus et
R² signifie CH₃, CH₂-CH₃,
• S₃ A b) 10 à 70 % en poids de monomères répondant à la formule I, dans laquelle :
R¹ a les significations mentionnées ci-dessus et
R² a les mêmes significations que dans K A b),
• S₃ A c) 0 à 10 % en poids d'un monomère pouvant être copolymérisé avec S₁a) à S₁b), les monomères ayant les significations mentionnées dans K A c),
la somme de S₃ A a), S₃ A b) et S₃ A c) étant dans chaque cas de figure égale à 100 %,
et le noyau du polymère B étant constitué d'un polymère dont les monomères présentent la composition suivante :
• K B a) 10 à 50 % en poids, par rapport au matériau de noyau, de (méth)acrylates dérivés d'esters saturés de l'acide (méth)acrylique 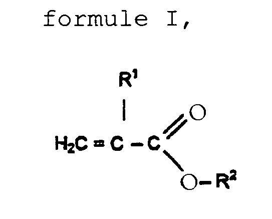 dans laquelle :
R¹ = H, CH₃
R² = CH₃, CH₂-CH₃
• K B b) au moins 50 % en poids, par rapport au matériau de noyau, de composés répondant à la formule I, dans laquelle R¹ et R² ont la signification indiquée dans K A b),
• K B c) 0 à 10 % en poids, par rapport au matériau de noyau, de composés pouvant être copolymérisés avec les monomères mentionnés ci-dessus, d'autres significations étant indiquées dans K A c),
• K B d) 0,1 à 9,9 % en poids de monomères contenant des groupements nucléophiles,
la coque la plus à l'extérieur S₁ du polymère B étant, si elle est présente, constituée d'un polymère dont les monomères présentent la composition suivante :
• S₁ B a) au moins 70 % en poids de monomères répondant à la formule I, dans laquelle :
R₁ a les significations mentionnées ci-dessus et
R₂ signifie CH₃, CH₂-CH₃,
• S₁ B b) 0 à 30 % en poids de monomères répondant à la formule I, dans laquelle :
R¹ et R² ont la signification indiquée dans K A b),
• S₁ B c) 0 à 10 % en poids d'un monomère pouvant être copolymérisé avec S₁ B a) à S₁ B b), la signification étant sinon comme dans K A c),
• S₁ B d) 0,1 à 9,9 % en poids de monomères contenant des groupements nucléophiles indiqués dans K B d,
la somme de S₁ B a), S₁ B b), S₁ B c) et S₁ B d) étant dans chaque cas de figure égale à 100 %,
la deuxième coque S₂ du polymère B étant, si elle est présente, constituée d'un polymère dont les monomères présentent la composition suivante :
• S₂ B a) au moins 20 % en poids de monomères répondant à la formule I, dans laquelle:
R¹ a les significations mentionnées ci-dessus et
R² = CH₃, CH₂-CH₃
• S₂ B b) 20 à 70 % en poids de monomères répondant à la formule I, dans laquelle:
R¹ a les significations mentionnées ci-dessus et R² a les mêmes significations que dans K B b),
• S₂ B c) 0,1 à 9,9 % en poids de monomères capables d'entrer en réaction nucléophile avec le monomère contenant des groupements époxy du polymère A, ces monomères nucléophiles étant ceux qui sont indiqués dans K B d),
la somme de S₂ B a), S₂ B b) et S₂ B c) étant dans chaque cas de figure égale à 100 %,
la troisième coque S₃ du polymère B étant, si elle est présente, constituée d'un polymère dont les monomères présentent la composition suivante :
• S₃ B a) au moins 30 % en poids de monomères répondant à la formule I, dans laquelle:
R¹ a les significations mentionnées ci-dessus et
R² signifie CH₃, CH₂-CH₃,
• S₃ B b) 10 à 70 % en poids du monomère répondant à la formule I, R¹ ayant les significations mentionnées ci-dessus et R² ayant les mêmes significations que dans K B b),
• S₃ B c) 0 à 10 % en poids d'un monomère pouvant être copolymérisé avec S₁a) à S₁b), les monomères ayant les significations mentionnées dans K A c),
• S₃ B d) 0,1 à 9,9 % en poids de monomères contenant des groupements nucléophiles, lesdits monomères contenant des groupements nucléophiles étant ceux indiqués dans K B d),
la somme de S₃ B a), S₃ B b), S₃ B c) et S₃ B d) étant dans chaque cas de figure égale à 100 %.

2. Liant pour une formulation de plastisol selon la revendication 1
**caractérisé en ce que**
les rapports quantitatifs de mélange peuvent prendre les valeurs suivantes, par rapport à la masse totale du polymère A :
K A 20 à 90 % en poids
S₁ A 10 à 80 % en poids
S₂A 0 à 70 % en poids
S₃ A 0 à 70 % en poids,
la composition de chacun des composants correspondant aux significations dans A1.

3. Formulation de plastisol, constituée
a) d'un plastifiant ou mélange de plastifiants
et
b) d'un mélange de polymères sous forme de particules selon la revendication 1, composé d'au moins deux composants A et B, les particules polymère des composants A et B comprenant 2 étages ou 3 étages ou plusieurs étages
et
c) des additifs usuels constitués de charges, d'apprêts d'adhésion, d'agents stabilisants, d'agents desséchants, d'additifs rhéologiques et de corps creux.

4. Formulation de plastisol selon la revendication 3,
**caractérisée en ce que**
les rapports quantitatifs de mélange peuvent prendre les valeurs suivantes, par rapport à la masse totale du polymère B :
K B 20 à 100 % en poids
S₁B 0 à 80 % en poids
S₂B 0 à 70 % en poids
S₃B 0 à 70 % en poids.

5. Utilisation de la formulation de plastisol selon l'une des revendications 3 à 4 pour revêtir des tôles.

6. Tôle, revêtue d'une formulation de plastisol selon l'une des revendications 3 à 4.

7. Véhicule, partiellement revêtu d'une formulation de plastisol selon les revendications 3 à 4.

8. Utilisation de la formulation de plastisol selon la revendication 3 comme protection de bas de caisse pour véhicules routiers.
